# EUROPEAN PATENT SPECIFICATION

(11) **EP 2 617 640 B1**
(45) Date of publication and mention of the grant of the patent: **25.05.2016**
(21) Application number: 11825519.9
(22) Date of filing: 14.09.2011
(51) Int. Cl.: B63B 1/38

(54) **WATER DISPLACEMENT BOAT WITH AIR CAVITIES ON THE BOTTOM**
WASSERVERDRÄNGUNGSBOOT MIT LUFTHOHLRÄUMEN IM BODEN
Navire comprenant des coussins d'air sur la partie inférieure de sa coque

(30) Priority: 15.09.2010 RU 2010138079
(43) Date of publication of application: 24.07.2013
(73) Proprietor: Ministerstvo Promyshlennosty I Torgovli of Russian Federation, Moscow 109074 (RU)
(72) Inventor: PUSTOSHNYY, Alexander Vladimirovich, St.Petersburg 192288 (RU); GORBACHEV, Yuriy Nikolaevich, St.Petersburg 198188 (RU); MESCHANOV, Evgeniy Aleksandrovich, St.Petersburg 195030 (RU); SVERCHKOV, Andrey Vladimirovich, St.Petersburg 198255 (RU)
(74) Representative: Jeck, Anton
(86) International application number: PCT/RU2011/000708
(87) International publication number: WO 2012/036595

(56) References cited:
- WO-A2-2007/025512
- SU-A1- 1 145 587
- US-A- 1 621 625
- US-A- 3 481 296
- US-A- 3 595 191
- US-A- 3 982 493
- US-A1- 2001 022 152

## Description

### 1. Field of the Invention

The invention relates to shipbuilding and concerns the construction of a displacement boat with air cavities at the bottom, which reduce the hydrodynamic resistance and improve performance of the vessel.

### 2. Background of the Invention

A device for generating a continuous air cavity at the bottom of a vessel is patented by USSR patent No. 1145587. The main element of this device is a bottom recess, which serves to form a continuous air cavity with a wave profile. This recess is defined by a forward step, side keels, and an aft slope. Longitudinal keels installed with-in this cavity divide it into sections to enhance the transverse stability, while the transverse fittings serve to form a continuous cavity as the vessel moves. However, this recess reduces the internal volume of the vessel, and that necessitates an increase in the freeboard or the height of the cargo Hold coamings in order to maintain their capacity, which, in turn, leads to an increasing mass of the hull and reduces the cargo capacity of the vessel. Besides, such device can be used only for newly-built vessels.

The nearest analogue is the device for generating air lubrication on the surface of the flat bottom (USSR Inventor's Certificate No. 288576). This device is intended to form stable air cavities on the bottom of the vessel and consists of a system of pipes pumping air under the bottom. The air is kept at the bottom with transverse fittings and longitudinal keels attached to the bottom. The fittings are sharp-edged, they are arranged over the entire width of the bottom at an about 2.5° angle to the bottom, between two vertical keels shifted towards the bilges from the center line, and protect air inlets from the external water stream, thus forming internal cavities open from the stern and serving to supply air into the cavities. This device can be implemented for both new and existing vessels. However, these bottom fittings and keels protrude significantly beyond the base plane of the vessel (0.3 - 0.4 m for river-going vessels), and, fairway depth restrictions make It necessary to reduce the design draught of the vessel In shallow waters and, consequently, reduce her cargo capacity (by 10-20%, depending on the design draught). Besides, the elements protruding beyond the base plane can be easily damaged in case of running aground, collision with under-water obstacles or a significant reduction of fairway depth.

In addition, the efficiency of such devices drastically decreases when the vessel operates in high seas or with a significant initial trim.

US 3 481 296 (A), considered as being the closest prior art, discloses an air-waterborne vessel supported above water solely by contained static air which is contained above water surface and within the sealed envelope of longitudinally disposed open bottom ducts.

US 3 595 191 (A) discloses a ship having a hill which is driven by at least one submerged propeller and which has on Its bottom a peripheral downwardly extending skirt defining a downwardly facing recess, at least one longitudinally extending partition and at least one transversely extending partition disposed within the recess. The bottom edges of the partitions are immersed in the water, so that the partitions divide the recess into a plurality of separate forward and rearward pockets. The bottom edge of the skirt Is at a greater depth than the bottom edges of the longitudinal partition. Compressor means are provided for charging the pockets with air. An air duct is extending between at least one of the front pockets and at least one of the rear pockets which air duct bypasses the compressor means.

### 3. Description of the Invention

The objective of the proposed invention is to design and develop a displacement boat with air cavities at the bottom intended to operate in restricted fairways, in shallow waters, In high seas, or with a significant initial trim.

Once this objective is achieved, the vessel will have enhanced performance with preservation of design draught and, consequently, reduced drag when operating in high seas or with a significant initial trim.

The proposed device is a displacement boat with air cavities at the bottom formed by consecutive rows of transverse fittings (oblique plates) and air ducts delivering pumped air into the cavities. The transverse fittings and longitudinal keels can be retracted (folded) as well as set into an operational position with a drive.

In a particular embodiment, the fittings and keels are attached to the roll axes installed on the bottom.

In another embodiment, the fittings are attached to the roll axes installed on the bottom, and the keels are inflatable.

In another possible embodiment, intermediate longitudinal keels, inflatable or attached to the roll axes on the bottom, are mounted between restricting longitudinal keels situated along both sides of the vessel.

In yet another particular embodiment, the restricting and intermediate longitudinal keels can be made discontinuous, as separate consecutive sections approximately as long as the distance between the rear edges of the corresponding adjoining transverse fittings, with the gaps between the adjoining sections of the longitudinal keels minimized to reduce air losses from under the bottom of the vessel.

In addition, the displacement boat is fitted with an air drive intended to open into an operating position and to fold the transverse fittings as well as the restricting longitudinal and intermediate keels, or to inflate the longitudinal keels. Along with that, the vessel is fitted with a system intended to keep the running heel and trim within the specified limits.

Retractability of the transverse fittings and longitudinal keels leads to the preservation of the design draught in restricted fairways and shallow waters, as well as to the preservation of the reduced drag in high seas or with a significant initial trim, when the protruding keels and fittings become unnecessary. Besides, it eliminates the possibility of damaging these keels and fittings when the vessel operates in extremely shallow waters, passes through flood-gates, runs astern or runs aground

### 4. Brief Description of the Drawings

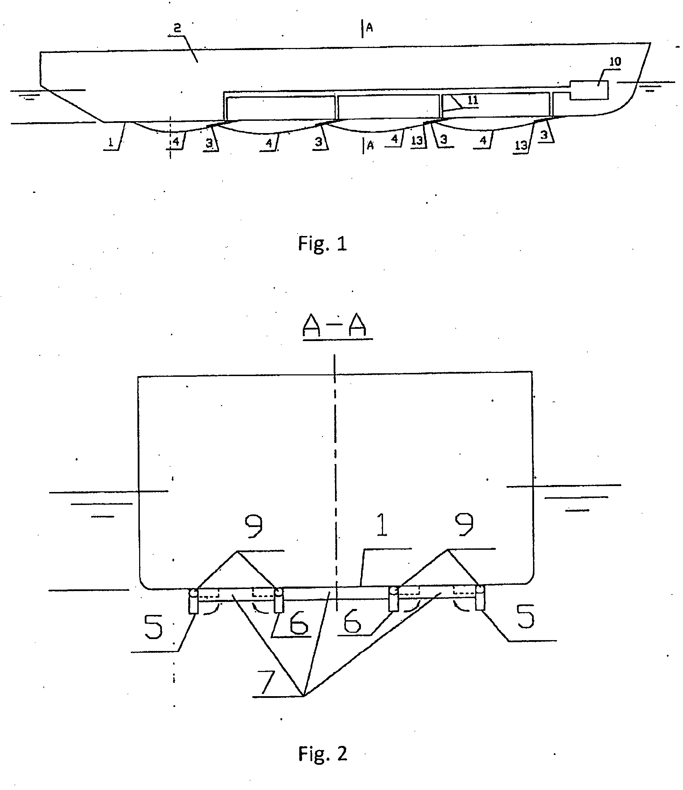

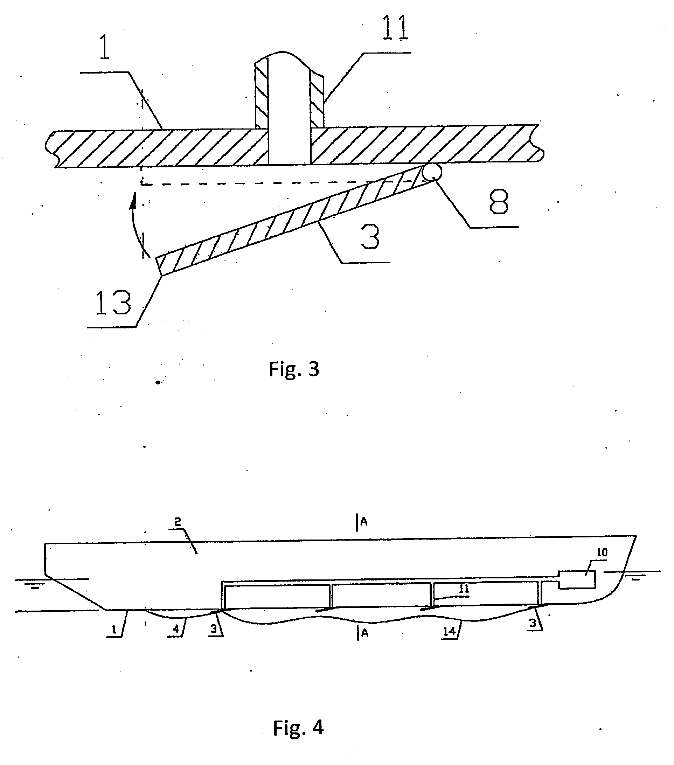

The proposed invention is explained in figures. Figure 1 provides an overall side view of the displacement boat with air cavities at the bottom. Figure 2 shows the A-A section of Figure 1. Figure 3 depicts the transverse fitting retraction.

### 5. Preferred Embodiment

A displacement boat with air cavities at the bottom (see Fig. 1, 2 and 3) comprises the following units: bottom 1 of vessel 2 is fitted with transverse fittings 3 (oblique plates), which form and maintain air cavities 4. Longitudinal keels 5, which define the formed cavities 4 and prevent air movement from cavities 4 towards the side of vessel 2 are mounted on both sides of bottom 1. The height and length of longitudinal keels 5 must be made sufficient to prevent losses of air pumped under the bottom for generating and maintaining the cavities. To enhance the transverse stability of the vessel and to prevent air circulation from one side to another, cavities 4 are divided with intermediate longitudinal keels 6 into several longitudinal sections 7 isolated from one another (see Fig. 2). Transverse fittings 3 can retract to bottom 1 by means of pivoting about their roll axes 8 installed on the bottom of the vessel (Fig. 3). Restricting 5 and intermediate 6 longitudinal keels can also be retracted to the bottom by means of pivoting about their roll axes 9 or by means of deflation, as proposed in another embodiment. In a retracted position, transverse fittings 3, restricting 5 and intermediate 6 longitudinal keels touch the bottom and practically do not protrude beyond the base plane of the vessel (see Fig. 1 and 2).

There is another possible embodiment of the present invention wherein transverse fittings 3 are installed on the roll axes attached to the bottom, restricting 5 and intermediate 6 longitudinal keels being inflatable and also retractable, so that they could touch the bottom; practically, not protruding beyond the base plane.

The vessel is equipped with a forced air supply unit 10 (blower or compressor) pushing air through pipes 11 (see Fig. 1) to form and maintain cavities 4 formed behind transverse fittings 3. The air can be supplied to each of the fittings 3, or to some of them, but the first fitting (forward) must always be provided with air. In the latter case, the rear cavities are formed by the air coming from the tail section of the cavity located further afore. Such air supply simplifies the structure and reduces energy losses caused by the air drag of pipes 11.

To make sure that the restricting 5 and intermediate 6 longitudinal keels can retract and come back into an upright position, these keels are made sectional (i.e., each keel is a series of consecutive sections with their length approximately equal to the distance between rear edges 13 of the corresponding transverse fittings 3 (see Fig. 1). The gaps between the adjoining sections of longitudinal keels 5 are minimized to reduce air losses from under the bottom of the vessel.

Vessel 2 has an air drive (not shown in figures) intended to open into an operating position and to retract transverse fittings 3, restricting 5 and Intermediate 6 longitudinal keels, as well as to inflate these keels if they are made inflatable.

To increase the efficiency of air cavities, the vessel is equipped with a system for controlling and maintaining the running trim and heel within the specified limits (this system is not shown in figures).

### 6. Applicability

As mentioned above, the present invention is intended for use in shipbuilding for displacement boats with air cavities operating in restricted fairways, shallow waters, high seas, or with a significant initial trim. The proposed device achieves this objective the following way:
If it becomes necessary to form air cavities at the bottom of the vessel, transverse fittings 3 unfold by means of an air drive at specified angles by pivoting about their roll axes 8. Restricting 5 and intermediate 6 longitudinal keels are brought into an operating position with an air drive either by pivoting about their roll axes 9 or, in another embodiment, by inflation.

Forced air supply unit 10 delivers air to the transverse fittings. The forwardmost fitting is supplied with air at all times, while the rest of the cavities beyond the first fitting are formed with the air carried from the tail section of the cavity located further afore. The formed cavities 4 ensure a drag reduction of the moving vessel.

If the restricting 5 and intermediate 6 longitudinal keels are inflatable, they are brought into an operating position by air from a forced air supply unit with a drive.

If the vessel moves in a fairway with a restricted depth, in shallow waters, or with a significant initial trim, the perturbing beyond the base plane traverse fittings 3 and keels 5, 6 are forced to retract bringing them to bottom 1 in order to prevent damage and reduce the hydrodynamic drag.

Aft bodies 13 of transverse fittings 3 set the location and the angle for the air cavities 4. These cavities 4, except for the last (rearmost) cavity, easily close on transverse fittings 3. The last cavity closes on the flat bottom of the vessel. Caverns 4 are defined on both sides with longitudinal restricting keels 5 set on both sides and preventing air from escaping from the cavities in the shipboard direction Fig. 4 shows a variant of the proposed device with the height of the intermediate transverse fittings lower than that of the forward (first) and aft (last) transverse fittings. In this case, it is possible to form a single air cavity with wave profile 14 on bottom 1 of vessel 2. This cavity is formed by a forward transverse fitting and closes on the aft transverse fitting. To ensure a smooth flow around the aft fitting, a short cavity 4 is formed behind it. This cavity closes on the flat bottom.

Depending on the operational conditions, there are two ways to reduce the hydrodynamic drag: either by saving fuel when the vessel performs the same transportation as a conventional vessel, or by increasing transportation due to the increased speed of the vessel with cavities while the power of main engines remains the same.

The proposed displacement boat has high operational reliability. The air cavities formed on her bottom do not result in a significant reduction of cargo capacity and a hydrodynamic drag increase when the vessel operates in high seas or with a significant initial trim.

## Claims

1. Displacement vessel with air cavities (4) at the bottom (1) formed by subsequent rows of transverse fittings (3) installed on said bottom (1), and two restricting longitudinal keels (5) which run on both sides of said bottom (1), and an air pipeline serving to deliver air to the cavities from an air-pumping unit (10), **characterized in that** these fittings (3) and keels (5) can be retracted and set upright by a drive.

2. Vessel (2) according to claim 1 **characterized in that** intermediate longitudinal keels (6) are installed between the keels (6) running at each of the sides.

3. Vessel (2) according to claims 1 and 2 **characterized in that** fittings (3) and keels (5, 6) are installed on the axes (8, 9) attached to the bottom.

4. Vessel (2) according to claims 1 and 2 **characterized in that** fittings (3) are installed on axes (8) attached to the bottom (1), and the keels are inflatable.

5. Vessel (2) according to claims 1-4 **characterized in that** restricting and intermediate longitudinal keels (5, 6) consist of separate sections with length approximately equal to the distance between rear edges (13) of the corresponding adjoining transverse fittings, wherein the gaps between the adjoining sections of the longitudinal keels (5) being minimized so as to reduce air losses.

6. Vessel (2) according to claims 1-5 **characterized in that** it has a system intended to control running heel and trim and keep it within necessary limits.

## Patentansprüche

1. Verdrängungswasserfahrzeug mit Lufthohlräumen (4) am Boden (1), gebildet durch aufeinander folgende Reihen von quer gerichteten Beschlägen (3), die auf dem Boden installiert sind (1) und zwei begrenzende längs gerichtete Kiele (5), die auf beiden Seiten des Bodens (1) verlaufen und eine Luftleitung, die dazu dient, Luft in die Hohlräume aus einer Luftpumpeinheit (10) zu liefern, **dadurch gekennzeichnet, dass** diese Beschläge (3) und Kiele (5) durch einen Antrieb zurückgezogen und aufrecht angeordnet werden können.

2. Wasserfahrzeug (2) nach Anspruch 1, **dadurch gekennzeichnet, dass** zwischenliegende längs gerichtete Kiele (6) zwischen den Kielen (5), die an beiden der Seiten verlaufen, installiert sind.

3. Wasserfahrzeug (2) nach Anspruch 1 und 2, **dadurch gekennzeichnet, dass** Beschläge (3) und Kiele (5,6) auf den Achsen (8, 9) installiert sind, die an den Boden befestigt sind.

4. Wasserfahrzeug (2) nach Anspruch 1 und 2, **dadurch gekennzeichnet, dass** Beschläge auf Achsen (8) installiert sind, die auf den Boden (1) befestigt sind, und die Kiele aufblasbar sind.

5. Boot (2) nach Anspruch 1 bis 4, **dadurch gekennzeichnet, dass** die begrenzenden und zwischenliegenden längs gerichteten Kiele (5,6) aus getrennten Abschnitten mit Längen bestehen, die ungefähr gleich dem Abstand zwischen hinteren Kanten (13) der entsprechenden benachbarten quer gerichteten Beschläge sind, wobei die Zwischenräume zwischen den benachbarten Abschnitten der längs gerichteten Kiele (5) minimiert sind, um Luftverluste zu reduzieren.

6. Boot (2) nach Anspruch 1 bis 5, **dadurch gekennzeichnet, dass** es ein System aufweist, das dazu beabsichtigt ist, die Krängung und den Trimm laufend zu kontrollieren und innerhalb der erforderlichen Grenzen zu halten.

## Revendications

1. Navire avec tirant d'eau muni de cavités d'air (4) au niveau de la carène (1), formées par des rangées successives de raccords transversaux (3) installés sur ladite carène (1), et deux quilles de restriction longitudinales (5) qui sont placées sur les deux côtés de ladite carène (1), et d'un conduit d'air qui sert à fournir de l'air aux cavités à l'aide d'une unité de pompage de l'air (10), **caractérisé en ce que** ces raccords (3) et des quilles (5) peuvent être rétractés et placés à la verticale par un entraînement.

2. Navire (2) selon la revendication 1, **caractérisé en ce que** des quilles longitudinales intermédiaires (6) sont installées entre les quilles (5) qui se trouvent au niveau de chacun des côtés.

3. Navire (2) selon les revendications 1 et 2, **caractérisé en ce que** les raccords (3) et les quilles (5, 6) sont installés sur les axes (8, 9) reliés à la carène.

4. Navire (2) selon les revendications 1 et 2, **caractérisé en ce que** les raccords (3) sont installés sur des axes (8) reliés à la carène (1), et les quilles sont gonflables.

5. Navire (2) selon les revendications 1 à 4, **caractérisé en ce que** les quilles longitudinales de restriction et intermédiaires (5, 6) se composent de sections distinctes qui possèdent une longueur approximativement égale à la distance entre les bords arrières (13) des raccords transversaux attenants correspondants, les espaces entre les sections attenantes des quilles longitudinales (5) étant minimisés de façon à réduire les pertes d'air.

6. Navire (2) selon les revendications 1 à 5, **caractérisé en ce qu'**il possède un système destiné à contrôler la gîte et l'assiette, et à les maintenir dans les limites nécessaires.
